# EUROPÄISCHE PATENTSCHRIFT

(11) **EP 3 894 807 B1**
(45) Veröffentlichungstag und Bekanntmachung des Hinweises auf die Patenterteilung: **11.01.2023**
(21) Anmeldenummer: 19805610.3
(22) Anmeldetag: 13.11.2019
(51) Int. Cl.: G01F 23/284, G01S 7/02, G01S 7/03, H01Q 1/22, H01Q 13/02

(54) **FÜLLSTANDSMESSGERÄT**
LEVEL METER
DÉTECTEUR DE NIVEAU DE REMPLISSAGE

(30) Priorität: 14.12.2018 DE 102018132285
(43) Veröffentlichungstag der Anmeldung: 20.10.2021
(73) Patentinhaber: Endress+Hauser SE+Co. KG, 79689 Maulburg (DE)
(72) Erfinder: MAYER, Winfried, 89290 Buch (DE); FEIßT, Klaus, 79252 Stegen (DE); CHEN, Qi, 79689 Maulburg (DE); REIMELT, Ralf, 79110 Freiburg (DE); BLÖDT, Thomas, 79585 Steinen (DE)
(74) Vertreter: Koslowski, Christine Adelheid
(86) Internationale Anmeldenummer: PCT/EP2019/081204
(87) Internationale Veröffentlichungsnummer: WO 2020/120059

(56) Entgegenhaltungen:
- EP-A1- 2 023 097
- EP-A2- 2 687 830
- WO-A1-93/01474
- WO-A1-03/098168
- WO-A1-2004/046663
- DE-A1-102015 119 690

## Beschreibung

Die Erfindung betrifft ein Füllstandsmessgerät zur Messung des Füllstandes eines in einem Behälter befindlichen Füllgutes.

In der Prozessautomatisierungstechnik werden allgemein Feldgeräte eingesetzt, die zur Erfassung oder zur Beeinflussung von Prozessvariablen dienen. Hierzu basiert die Funktionsweise der Feldgeräte auf jeweils geeigneten Messprinzipien, um die entsprechenden Prozessvariablen, wie Füllstand, Durchfluss, Druck, Temperatur, pH-Wert, Redoxpotential oder Leitfähigkeit zu erfassen. Verschiedenste solcher Feldgeräte-Typen werden von der Firma Endress + Hauser hergestellt und vertrieben.

Zur Füllstandsmessung von Füllgütern in Behältern haben sich Radar-basierte Messverfahren etabliert, da sie robust und wartungsarm sind. Dabei werden unter dem Begriff *"Behälter"* im Rahmen der Erfindung auch nicht-abgeschlossene Behältnisse, wie beispielsweise Becken, Seen oder fließende Gewässer verstanden. Ein zentraler Vorteil Radar-basierter Messverfahren besteht in der Fähigkeit, den Füllstand quasi kontinuierlich messen zu können. Im Kontext dieser Patentanmeldung bezieht sich der Begriff "Radar" auf Mikrowellensignale mit Frequenzen zwischen 0.03 GHz und 300 GHz.

Im Fall von Radar-basierter Füllstandsmessung bildet das Pulslaufzeit-Prinzip ein etabliertes Messprinzip. Hierbei werden pulsförmige Mikrowellensignale zyklisch in Richtung des Füllguts ausgesandt und die Laufzeit bis zum Empfang des entsprechenden pulsförmigen Empfangssignals gemessen. Auf Basis dieses Messprinzips können Füllstandsmessgeräte mit vergleichsweise geringem schaltungstechnischem Aufwand realisiert werden. Sofern eine komplexere Schaltungstechnik in Kauf genommen werden kann, bietet sich zur Radar-basierten Füllstandsmessung auch FMCW ("*Frequency Modulated Continuous Wave")* als Messprinzip an. Das Funktionsprinzip von FMCW- und Pulsradar- basierten Füllstandsmessgeräten wird beispielsweise in *"*Radar Level Measurement"; Peter Devine, 2000 beschrieben.

Im Bereich der Füllstandsmessung wird vorwiegend bei Radar-Frequenzen von 6 GHz, 26 GHz oder 79 GHz gemessen. Generell gilt, dass der Strahlkegel des Radar-Signals umso schmaler ist, je höher das Frequenzband gewählt wird. Außerdem sind zumindest bei FMCW höhere Frequenzbänder insofern bevorzugt, als dass eine größere absolute Frequenz-Bandbreite genutzt werden kann. Bei 79 GHz wird beispielsweise eine Bandbreite von 4 GHz genutzt, also von 76 GHz bis 80 GHz. Durch eine höhere Bandbreite kann wiederum eine höhere Auflösung der Abstandsmessung erreicht werden. Insbesondere bei der Füllstandsmessung stellt dies eine wichtige Anforderung dar, da je nach Anwendung eine möglichst genaue Kenntnis des Füllstandes erforderlich ist. Ein weiterer Vorteil bei der Verwendung hoher Frequenzen besteht darin, dass das Radar-basierte Abstandsmessgerät mit einer kompakteren Antenne ausgestattet werden kann, ohne dass die Bündelungs-Wirkung der Antenne vermindert wird. Bei der Füllstandsmessung werden dadurch beispielsweise verkleinerte Anschluss-Flansche zur Anbringung am Behälter möglich. Daher ist es erstrebenswert, Füllstands- bzw. Abstandsmessung im Allgemeinen auch bei höheren Frequenzen als 79 GHz (bis hin zu Radarfrequenzen von 300 GHz) zu betreiben.

Das elektrische Hochfrequenz-Signal, mittels dem das Radar-Signal erzeugt wird, kann bei Frequenzen von über 100 GHz nicht mehr über hybride Verbindungstechnologien zwischen dem Halbleiterbauteil, mit dem das entsprechende elektrische Hochfrequenz-Signal erzeugt wird, und der Leiterkarte, auf dem das Halbleiterbauteil platziert ist, geführt werden. Da die Dimensionen der Verbindungsstrukturen wie Bonddrähte oder Lötstellen zu den jeweiligen elektronischen Bauteilen in der Größenordnung der Wellenlänge der Radar-Signale liegen, stören diese Verbindungsstrukturen als parasitäre Elemente das Übertragungsverhalten. Darüber hinaus verursachen viele der in der Elektronik üblichen Werkstoffe mit der Frequenz steigende Verluste, durch welche die elektrischen Hochfrequenz-Signale schon über kurze Leitungs-Distanzen erheblich gedämpft werden. Die leistungsfähige und zuverlässige Kontaktierung des Halbleiterbauteils mittels hybrider Standardtechnologien ist aus diesem Grund mit zunehmender Frequenz schwierig. Daher werden zur Erzeugung bzw. zum Empfang von Radar-Signalen oberhalb von insbesondere 100 GHz Halbleiterbauteile eingesetzt, von denen das elektrische Hochfrequenz-Signal unmittelbar als Radar-Signal ausgekoppelt werden kann, bzw. mit denen eingehende Radar-Signale unmittelbar in entsprechende elektrische Hochfrequenz-Signale umwandelbar sind. Somit ist eine hybride Signalführung nicht mehr erforderlich. Die Aus- bzw. Einkopplung der Radar-Signale erfolgt in diesem Fall über einen endsprechenden Primärstrahler. Dabei handelt es sich beispielsweise um eine Planar-Antenne, die mittels mikromechanischer Verfahren auf dem Halbleiterbauteil aufgebracht ist. Ein solches Halbleiterbauteil wird unter anderem in der Veröffentlichungsschrift DE 10 2015 119 690 A1 beschrieben. Somit wird vermieden, dass die elektrischen Hochfrequenz-Signale über externe Leiterkarten, Lötverbindungen oder Bonddrähte geführt werden müssen. Dies vermindert gerade bei hohen Frequenzen die Leistungsfähigkeit und Störanfälligkeit des Abstandsmessgerätes.

Vorteilhaft an einer monolithischen Realisierung ist zudem, dass sowohl die SignalErzeugung, als auch die Signal-Auswertung im gleichen Halbleiterbauteil realisiert werden können, so dass das Füllstandsmessgerät insgesamt kompakter ausgelegt werden kann. Zur Realisierung der Signal-Erzeugungseinheit bzw. der Signal-Auswertungseinheit können je nach Messverfahren bekannte Schaltungskomponenten im Halbleiterbauteil implementiert werden: Im Fall von FMCW kann das Hochfrequenz-Signal für das auszusendende Radar-Signal mittels einer PLL ("*Phase Locked Loop")* erzeugt werden; Das empfangene Radar-Signal kann per Mischer mit dem auszusendenden Hochfrequenz-Signal gemischt werden, so dass aus der so genannten Differenz-Frequenz des gemischten Signals der Abstand bzw. Füllstand ermittelt werden kann. Ein entsprechend ausgelegter Auswertungsblock kann die Differenz-Frequenz beispielsweise mittels einer FFT ("*Fast Fourier Transformation")* des gemischten Signals ermitteln.

Das direkte Abstrahlen des Radar-Signals vom Halbleiterbauteil aus ist jedoch zumindest bei Füllstandsmessung nicht möglich, da die Abstrahlung vom Primärstrahler weitestgehend ungerichtet erfolgt. Naheliegend ist die Bündelung der Abstrahlung über eine dielektrische Linse. Eine effiziente Ausleuchtung einer solchen Linse kann jedoch nur dann erfolgen, wenn entweder der Primärstrahler eine hinreichende Strahlbündelung aufweist oder die Linse direkt auf dem Halbleiterbauteil aufgesetzt wird. Ein stark bündelnder Primärstrahler weist jedoch den Nachteil auf, dass hierfür eine entsprechend große Chipfläche auf dem Halbeiterbauteil vorgehalten werden muss. Eine direkt auf dem Primärstrahler aufgesetzte Linse hat wiederum den Nachteil, dass dadurch auch das Halbleiterbauteil mittelbar dem Füllgut bzw. der Umwelt ausgesetzt ist bezüglich mechanischer und thermischer Belastung. Eine hiergegen schützende Kapselung, bspw. in Form eines druckfesten Fensters, ist nahe des Halbleiterbauteils fertigungstechnisch wiederum nur sehr schwierig zu realisieren.

Die WO 2004/046663 A1 offenbart ein Radar-basiertes Füllstandsmessgerät mit einem Wellenleiter, mit welchem anhand von Hochfrequenzsignalen ein Füllstandswert bestimmt wird.

Der Erfindung liegt daher die Aufgabe zugrunde, ein Radar-basiertes Füllstandsmessgerät bereitzustellen, das für hohe Radarfrequenzen ausgelegt ist und unter harschen Umgebungsbedingungen einsetzbar ist.

Die Erfindung löst diese Aufgabe durch ein Radar-basiertes Füllstandsmessgerät, das zumindest folgende umfasst:
- Ein Halbleiterbauteil, das ausgelegt ist,
   ∘ um elektrische Hochfrequenz-Signale vorzugsweise mit einer Frequenz von zumindest 100 GHz zu erzeugen und/oder entsprechende Hochfrequenz-Signals zu empfangen, und
   ∘ um anhand von zumindest den empfangenen Hochfrequenzsignalen einen Füllstandswert zu bestimmen,
- einen dielektrischen Wellenleiter, der vorzugsweise aus einem Isolationsmaterial mit einem Dielektrizitätswert von größer als 1 (insbesondere HDPE oder PTFE) gefertigt ist, wobei der Wellenleiter derart mit dem Halbleiterbauteil kontaktiert ist, um die Hochfrequenz-Signale als Radar-Signale in
- eine Antenne einzukoppeln, und/oder um empfangene Radar-Signale aus der Antenne als elektrische Signale in das Halbleiterbauteil einzukoppeln,
- eine Vergusskapselung, die zumindest den Wellenleiter radial derart kapselt, dass zwischen dem Wellenleiter und der Vergusskapselung ein definierter Hohlraum ausgebildet ist.

Vorteilhaft an dem erfindungsgemäßen Füllstandsmessgerät ist, dass insbesondere durch die partielle Führung des Radar-Signals im Wellenleiter die hermetische und druckfesteste Kapselung zum Füllgut hin weit beabstandet von dem empfindlichen Halbleiterbauteil realisiert werden kann. Dadurch wird die Fertigbarkeit des Füllstandsmessgerätes vereinfacht. Auf der anderen Seite bietet das erfindungsgemäße Füllstandsmessgerät den Vorteil, dass insbesondere durch die vom Wellenleiter beabstandete Vergusskapselung eine effiziente Ein- und Auskopplung der Radar-Signale ermöglicht wird, ohne dass der Schutz des Halbleiterbauteils vor thermischer Belastung vermindert wird. Somit kann das Füllstandsmessgerät zum einen Energie-Effizient betrieben werden. Durch die Implementierung des Halbleiterbauteils ist das Füllstandsmessgerät zum anderen kompakt auslegbar, ohne dass die Bündelungswirkung der Antenne vermindert wird. Dabei kann das Füllstandsmessgerät je nach Einsatzgebiet flexibel ausgelegt werden.

So kann beispielsweise für Hochtemperaturanwendungen der Wellenleiter mit einer Länge von zumindest 3 cm, insbesondere mehr als 8 cm, bemaßt werden, um das Halbleiterbauteil und etwaige weitere Elektronik thermisch von der Antenne zu entkoppeln. Die Ein- und Auskopplung der Radar-Signale kann weiter optimiert werden, wenn die Vergusskapselung so ausgelegt ist, dass der Hohlraum zwischen dem Wellenleiter und der Vergusskapselung einen Abstand von mindestens dem Zweifachen der Wellenlänge der Radar-Signale aufweist.

Sofern das Halbleiterbauteil auf einer Leiterkarte angeordnet ist, kann hierüber die Fixierung des Wellenleiters am Halleiterbauteil erfolgen, indem auf der Leiterkarte innerhalb der Vergusskapselung eine elektromagnetische Schirmung des Halbleiterbauteils angebracht wird. Dabei fixiert die Schirmung den Wellenleiter zum Halbleiterbauteil hin in der Form, dass die Radar-Signale verlustminimiert in den Wellenleiter bzw. in das Halbleiterbauteil einkoppelbar sind. Somit erfolgt die Schirmung des Halbleiteiterbauteils und die Fixierung des Wellenleiters durch dasselbe Bauteil. Sofern das Halbleiterbauteil auf einer Leiterkarte angeordnet ist, kann zudem die Vergusskapselung so konzipiert werden, dass zusätzlich die vom Halbleiterbauteil abgewandte Fläche der Leiterkarte gekapselt wird. Somit sind auch etwaige elektronische Komponenten, die auf der Leiterkarten-Rückseite angeordnet sind, von der Vergusskapselung erfasst.

Bei Konzipierung des Füllstandsmessgerätes mit der zuvor beschriebenen Schirmung kann die Fertigbarkeit des Füllstandsmessgerätes vereinfacht werden, indem der Wellenleiter derart zweiteilig ausgelegt ist, dass der Wellenleiter im Bereich der Schirmung in ein erstes Segment und ein zweites Segment untergliedert wird.

Ein mögliches Gehäuse des Füllstandsmessgerätes kann so ausgelegt werden, dass zumindest das Halbleiterbauteil, der Wellenleiter und die Vergusskapselung von dem Gehäuse umschlossen werden, wobei die Antenne außerhalb des Gehäuses befestigt zu sein hat. Zur Aus- und Einkopplung der Radar-Signale zwischen dem Gehäuse-Inneren und dem Äußeren ist dementsprechend eine Durchführung im Gehäuse vorzuhalten. Eine solche Durchführung kann dabei vorzugsweise so konzipiert werden, dass der Wellenleiter derart zur Antenne hin fixiert wird, so dass die Radar-Signale verlustarm in die Antenne bzw. in den Wellenleiter einkoppelt werden. Zwecks vereinfachter Fertigung des Füllstandsmessgerätes kann auch die Durchführung bezüglich des Wellenleiters selbstzentrierend ausgelegt werden.

Anhand der nachfolgenden Figuren wird die Erfindung näher erläutert. Es zeigt:
Fig. 1: Eine typische Anordnung eines Radar-basierten Füllstandsmessgerätes an einem Behälter, und
Fig. 2: eine Querschnittsansicht des erfindungsgemäßen Füllstandsmessgerätes.

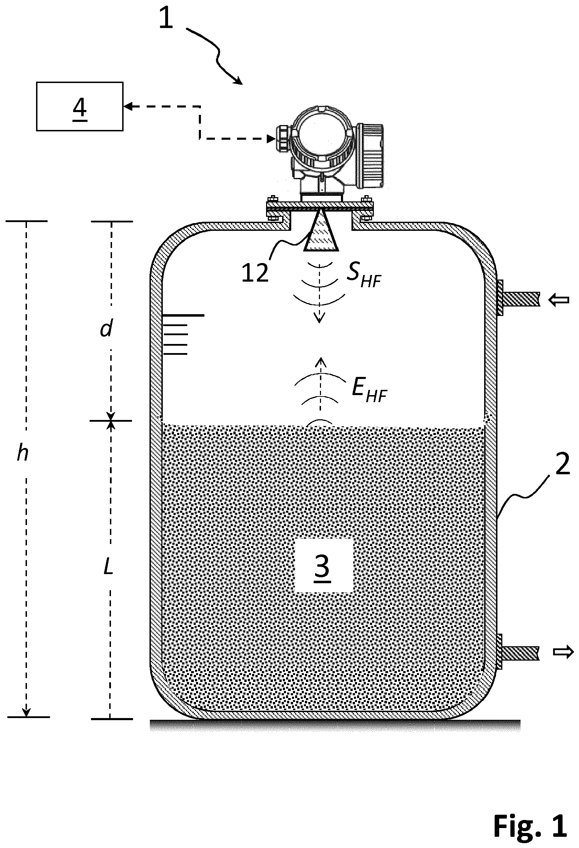

Zum grundsätzlichen Verständnis der Erfindung ist in Fig. 1 eine typische Anordnung eines Radar-basierten Füllstandsmessgerätes 1 an einem Behälter 2 gezeigt. In dem Behälter 2 befindet sich ein Füllgut 3, dessen Füllstand L durch das Füllstandsmessgerät 1 zu bestimmen ist. Dazu ist das Füllstandsmessgerät 1 oberhalb des maximal zulässigen Füllstands L am Behälter 2 angebracht. Je nach Einsatzgebiet kann die Einbauhöhe h des Füllstandsmessgerätes 1 über dem Behälterboden bis zu mehr als 100 m betragen.

In der Regel ist das Füllstandsmessgerät 1 über ein Bussystem, etwa "Ethernet", "PROFIBUS", "HART" oder "Wireless HART" mit einer übergeordneten Einheit 4, beispielsweise einem Prozessleitsystem oder einer dezentralen Datenbank verbunden. Hierüber können zum einen Informationen über den Betriebszustand des Füllstandsmessgerätes 1 kommuniziert werden. Über das Bussystem können jedoch auch Informationen über den Füllstand L übermittelt werden, um gegebenenfalls am Behälter 2 vorhandene Zu- oder Abflüsse zu steuern.

Da das in Fig. 1 dargestellte Füllstandsmessgerät 1 als frei abstrahlendes Gerät ausgelegt ist, umfasst es eine entsprechende Antenne 12. Wie angedeutet, ist die Antenne 12 vor allem bei Radar-Frequenzen unterhalb von 60 GHz als Hornantenne ausgelegt. Dabei ist die Antenne 12 so ausgerichtet, dass Radar-Signale S_{HF} in Richtung des Füllgutes 3 ausgesendet werden.

An der Oberfläche des Füllgutes 3 werden die Radar-Signale S_{HF} reflektiert und nach einer korrespondierenden Signallaufzeit durch die Antenne 12 des Füllstandsmessgerätes 1 als reflektierte Radar-Signale E_{HF} empfangen. Da die Signallaufzeit von der Entfernung d = h - L des Füllstandsmessgerätes 1 zur Füllgut-Oberfläche abhängt, lässt sich anhand der Signallaufzeit der Füllstand bestimmen.

Der Öffnungswinkel des Strahlkegels, unter dem die Radar-Signale S_{HF} ausgesendet werden, bzw. unter dem die reflektierten Radar-Signale E_{HF} empfangen werden, hängt neben der Dimensionierung der Hornantenne 12 von der Frequenz der Radar-Signale S_{HF}, E_{HF} ab. Je höher die Frequenz ist, desto enger ist der Öffnungswinkel. Ein enger Öffnungswinkel verringert die Gefahr, Störreflektionen im Behälter-Inneren zu erzeugen, die fälschlicherweise als Füllstands-Echo interpretiert werden könnten. Von der Frequenz hängt außerdem die potentiell erreichbare Auflösung des Füllstandes ab, zumindest sofern das Füllstandsmessgerät mittles des FMCW-Verfahrens arbeitet. Auch hier gilt, je höher die Frequenz, desto höher die potentiell erzielbare Auflösung des Füllstandswertes.

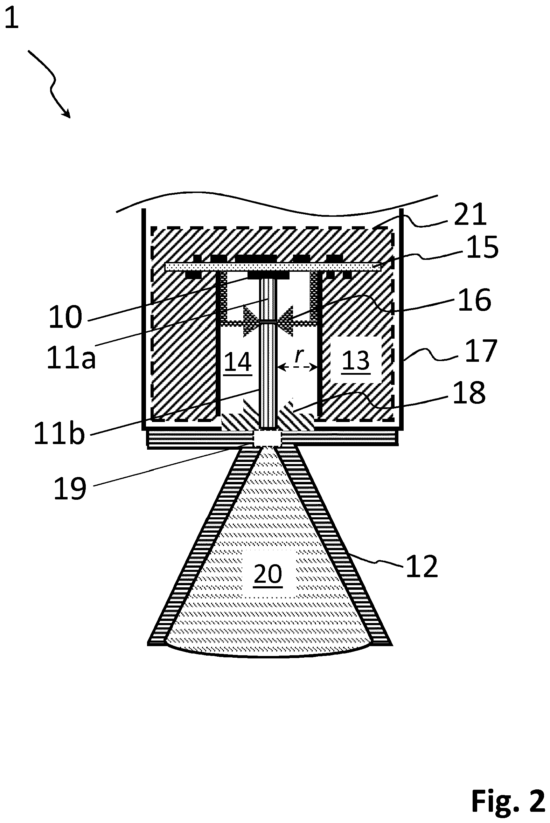

Ein schematischer Aufbau des erfindungsgemäßen Füllstandsmessgerätes, dass bei Radar-Frequenzen von mehr als 100 GHz arbeiten kann und die damit verbundenen Vorteile ausnutzt, ist in Fig. 2 gezeigt:
Kern des erfindungsgemäßen Füllstandsmessgerätes 1 ist ein Halbleiterbauteil 10, das je nach implementiertem Messprinzip (FMCW oder Puls-Laufzeit-Prinzip), entsprechende Hochfrequenz-Signale s_{HF}, e_{HF} mit Frequenzen bis zu 160 GHz oder mehr erzeugen bzw. verarbeiten kann. Bei Implementierung des FMCW-Prinzips wird das auszusendende Hochfrequenz-Signal s_{HF} beispielsweise mittels eines Oszillators (zum Beispiel als *"Voltage Controlled Oscillator"* ausgelegt), der per PLL ("*Phase Locked Loop")* geregelt ist, erzeugt. Zur Signalverarbeitung kann das Halbleiterbauteil 10 empfangsseitig einen Mischer zum Mischen des momentan auszusendenden Hochfrequenz-Signals s_{HF} mit dem aktuell empfangenen Hochfrequenz-Signal e_{HF} umfassen. Dies wird genutzt, um aus dem gemischten Signal in einem entsprechenden Schaltungsblock des Halbleiterbauteils 10 beispielsweise mittels einer FFT ("*Fast Fourier Transformation")* über die Frequenz des gemischten Signals die Entfernung d zum Füllgut 3 bzw. den Füllstand L ermitteln zu können.

Bei der in Fig. 2 dargestellten Ausführungsvariante des erfindungsgemäßen Hochfrequenzbausteins 1 ist das Halbleiterbauteil 10 auf einer Leiterkarte 15 angeordnet.

Über die Leiterkarte 15 erfolgt die Energieversorgung des Halbleiterbauteils 10 und auch etwaiger Datentransfer zur übergeordneten Einheit 4. Dadurch, dass die Erzeugung und Verarbeitung der Hochfrequenz-Signale s_{HF}, e_{HF} komplett auf dem Halbleiterbauteil 10 erfolgt, müssen zur Leiterkarte 15 keine Hochfrequenz-Signale geführt werden. Hierdurch entfallen verlustreiche, hybride Verbindungsleitungen.

Vom Halbleiterbauteil 10 werden die Hochfrequenz-Signale s_{HF} beispielsweise über einen Primärstrahler (nicht explizit in Fig. 2 dargestellt) als Radar-Signale S_{HF} in einen Wellenleiter 11a, b ausgekoppelt. Analog hierzu werden die im Behälter 2 reflektierten Radar-Signale E_{HF} vom Wellenleiter 11a, b in das Halbleiterbauteil 10 eingekoppelt. Hierzu kann der Primärstrahler bspw. als rechteckförmige Planar-Struktur ausgelegt sein, die auf derjenigen Seite des Halbleiterbauteils 10 angeordnet ist, die der Leiterkarte 15 abgewandt ist. Dabei ist es vorteilhaft, wenn der Wellenleiter 11a, b in direktem Kontakt mit dem Halbleiterbauteil 10 steht, beispielsweise durch eine entsprechende Verklebung oder einen statisch vorherrschenden Anpressdruck.

Die Querschnittsform (bspw. kreisförmig oder rechteckig) und die QuerschnittsAbmessungen des Wellenleiters 11a, b sind an die Frequenz bzw. die gewünschte Mode des auszusendenden/einzukoppelnden Radar-Signals S_{HF}, R_{HF} anzupassen. Bei rechteckiger Auslegung können die zwei Kantenlängen des Rechteckes bspw. so ausgelegt werden, dass sie ein Kantenlängen-Verhältnis von 2:1 aufweisen. Dabei kann die erste Kantenlänge jeweils mit einem Drittel der Wellenlänge des Hochfrequenz-Signals S_{HF}, R_{HF} bemaßt werden, die zweite Kantenlänge kann entsprechend mit 2/3 der Wellenlänge ausgeführt werden. Damit die Radar-Signale S_{HF}, E_{HF} innerhalb des Wellenleiters 11a, b verlustarm geleitet werden, ist das Material des Wellenleiters im Hinblick auf die Dielektrizitätszahl entsprechend zu wählen. Da zur Wellenleitung eine Dielektrizitätszahl von mindestens ca. 1,5 vorteilhaft ist, bieten sich insbesondere HDPE oder PTFE als Material für den Wellenleiter 11a, b an.

Sofern das Halbleiterbauteil 10 nicht als *"Bare Die"* auf der Leiterkarte 15 angeordnet ist, ist die Kapselung des Halbleiterbauteils 10 so anzupassen, dass zwischen dem Wellenleiter 11a, b und dem Primärstrahler ein entsprechender wellenleitender Kontakt möglich ist. Es kann beispielsweise eine Vergusskapselung eingesetzt werden, bei der die Fläche des Primärstrahlers ausgespart ist. Somit kann das Halbleiterbauteil 10 beispielsweise als entsprechend modifiziertes DIP- ("*Dual In-line Package")* oder QFN-("*Quad Flat no Leads Package")* Bauteil konzipiert sein. Für eine vereinfachte Anbringung des Wellenleiters 11a, b am Halleiterbauteil 10 ist es zudem denkbar, die Kapselung bezüglich des Primärstrahlers selbstzentrierend für den Wellenleiter 11a, b auszulegen.

Die Fixierung des Wellenleiters 11a, b in Bezug zum Halbleiterbauteil 10 erfolgt bei dem in Fig. 2 gezeigten Ausführungsbeispiel des erfindungsgemäßen Füllstandsmessgerätes 1 mittels einer Schirmung 16. Die Schirmung 16 ist dabei als Kappe ausgelegt und so auf der Leiterkarte 15 angebracht, dass sie das Halbleiterbauteil 10 auf der Leiterkarte 15 abdeckt. Zur Erzielung der Schirmungswirkung ist es erforderlich, zumindest die Oberfläche des Schirmung 16 elektrisch leitfähig auszulegen. Dementsprechend kann die Schirmung 16 zum Beispiel komplett aus einem Metall gefertigt sein. Als Kappe könnte aber auch ein beschichtetes Plastiksubstrat eingesetzt werden, bei dem die metallische Beschichtung beispielsweise durch PVD ("*Physical Vapor Deposition*") aufgetragen wird. Dadurch, dass die Schirmung 16 in der Achse des Wellenleiters 11a, b eine entsprechende Durchführung umfasst, übernimmt sie neben der Schirmung auch die Fixierung des Wellenleiters 11a, b in Bezug zum Halbleiterbauteil 10.

Außerhalb des Schirmung 16 ist radial um den Wellenleiter 11a, b eine Vergusskapselung 13 angeordnet. Erfindungsgemäß wird hierdurch der Wellenleiter 11a, b so gekapselt, dass zwischen dem Wellenleiter 11a, b und der Vergusskapselung 13 ein definierter Hohlraum 14 ausgebildet wird. Dabei ist die Vergusskapselung 13 so strukturiert, dass sie radial vom Wellenleiter 11a, b ausgehend einen Abstand r von mindestens dem Zweifachen der Wellenlänge der Radar-Signale S_{HF}, E_{HF} aufweist. Durch den Abstand r wird die Transmission der Radar-Signale S_{HF}, E_{HF} im Wellenleiter 11a, b entscheidend erhöht. Strukturiert werden kann die Vergusskapselung 13 beispielsweise mittels eines entsprechenden Vergussbechers um den Wellenleiter 11a, b herum, der die Struktur der Vergusskapselung 13 beim Vergießen definiert. In der dargestellten Ausführungsvariante umschließt die Vergusskapselung 13 außerdem die dem Halbleiterbauteil 10 abgewandte Fläche der Leiterkarte 15. Somit werden auch etwaige elektronische Bauteile auf der Rückseite der Leiterkarte 15 gekapselt. Optional kann außerdem die Außenfläche 21 der Vergusskapselung 13, wie in Fig. 2 dargestellt ist, elektromagnetisch schirmend ausgelegt werden, um eine verbesserte elektromagnetische Verträglichkeit zu erreichen. Denkbar ist hierbei wiederum, die Außenfläche der Vergusskapselung 13 beispielsweise durch PVD ("*Physical Vapor Deposition*") metallisch zu beschichten. Alternativ kann hierzu auch ein separater, metallischer Vergussbecher eingesetzt werden.

Zum Aussenden der Radar-Signale S_{HF} bzw. zum Empfang reflektierter Radar-Signale E_{HF} mündet der Wellenleiter 11a, b in einer Hornantenne 12.

Dabei befindet sich die Hornantenne 12 außenseitig am Gehäuse 17 des Füllstandsmessgerätes 1, in dem die Leiterkarte 15 mit dem Halbleiterbauteil 10, der Wellenleiter 11a, b und die Schirmung 16 untergebracht sind. Zur Fixierung des Wellenleiters 11a, b zur Hornantenne 12 hin umfasst das Gehäuse 17 eine entsprechende Durchführung 18 für den Wellenleiter 11a, b. Wie in Fig. 2 angedeutet, kann auch diese Durchführung 18 so ausgelegt werden, dass der Wellenleiter 11a, b bei der Montage automatisch zentriert wird.

Um das Innere des Gehäuses 17 hermetisch und druckbeständig gegenüber dem Inneren des Behälters 2 zu isolieren, ist zwischen dem Wellenleiter 11a, b und Hornantenne 12 auf Höhe der Durchführung 18 ein Fenster 19 eingebracht, dass für die Radar-Signale S_{HF}, E_{HF} transparent ist. Es kann dementsprechend aus einem Glas oder einer Keramik gefertigt sein und beispielsweise per Kleben, Schweißen oder einem sonstigen aufschmelzenden Fügeverfahren fixiert werden. Vorzugsweise ist das Fenster 19 aus elektrisch nichtleidenden Material mit einem Dielektrizitätswert von größer als 1 gefertigt ist. Von der Stärke her ist das Fenster 19 außerdem idealerweise so auszulegen, dass es einem Absolut-Druck von mindestens 100 Bar standhält.

Um Ansatzbildung in der Hornantenne 12, und damit verbundene Leistungsminderung zu unterbinden, ist im gesamten Inneren der Hornantenne 12 eine Füllung 20 eingebracht. Dabei besteht die Füllung 20 aus einem elektrisch isolierenden Material. Aufgrund der Wirkung der Füllung 20 als Dielektrikum ist die Auslegung der Hornantenne 12 entsprechend an das Dielektrikum anzupassen.

Vorteilhaft an der erfindungsgemäßen Führung der Radar-Signale S_{HF}, E_{HF} zwischen dem Halbleiterbauteil 10 und der Hornantenne 13 mittels des Wellenleiters 11a, b ist, dass der Abstand zwischen der Leiterkarte 15 und der Hornantenne 12 bedarfsabhängig dimensioniert werden kann. Im Falle von Messanwendungen, bei denen im Behälter-Inneren hohe Tempertaren oberhalb von 100 C° vorherrschen, kann der Wellenleiter beispielweise mit einer Länge von bis zu 8 cm oder mehr bemaßt werden, so dass die elektronischen Komponenten auf der Leiterkarte entsprechend thermisch vom Klima im Behälter 3 entkoppelt werden.

Wie in Fig. 2 gezeigt, kann zum Zweck vereinfachter modularer Fertigung verschiedener Varianten des erfindungsgemäßen Füllstandsmessgerätes 1 der Wellenleiter 11a, b zweiteilig aufgebaut werden. Bei der in Fig. 2 gezeigten Ausführungsvariante des Füllstandsmessgerätes 1 teilt sich der Wellenleiter 11a, b daher auf Höhe der Schirmung 16 in ein erstes, dem Halbleiter 10 zugewandten Segment 11a und ein zweites Segment 11b auf, das der Hornantenne 12 zugewandt ist. Zwecks ungehinderter Transmission der Radar-Signale S_{HF}, E_{HF} entlang der resultierenden Kontaktstelle zwischen den Segmenten 11a, 11b ist es von Vorteil, wenn die Segmente 11a, 11b zumindest durch einen statischen Anpressdruck miteinander in Verbindung stehen. Auch das Verkleben dieser Kontaktstelle mit einem für die Radar-Signale S_{HF}, E_{HF} transparenten Kleber ist möglich.

Im Gegensatz zu der Darstellung in Fig. 2 kann der Wellenleiter 11a, b alternativ mit einem gebogenen Verlauf, vorzzugsweise bei rechteckigem Querschnitt, konzipiert werden. Hierzu ist es im Rahmen der Fertigung vorteilhaft, wenn der Wellenleiter 11a, b aus einem flexiblen Material hergestellt ist. Denkbar ist in diesem Zusammenhang, den Wellenleiter 11a, b entlang seines Verlaufs um 90° zu biegen und die Hornantenne 12 entsprechend verkippt am Gehäuse 12 anzuordnen, um den gesamten Aufbau des Füllstandsmessgerätes 1 je nach Einbausituation am Behälter 2 so kompakt wie möglich auslegen zu können.

### Bezugszeichenliste

- 1: Füllstandsmessgerät
- 2: Behälter
- 3: Füllgut
- 4: Übergeordnete Einheit
- 10: Halbleiterbauteil
- 11 a, b: Wellenleiter
- 12: Antenne
- 13: Vergusskapselung
- 14: Hohlraum
- 15: Leiterkarte
- 16: Schirmung
- 17: Gehäuse
- 18: Durchführung
- 19: Fenster
- 20: Füllung
- 21: Elektromagnetisch schirmende Außenfläche der Kapslung
- d: Entfernung
- E_{HF}: Eingehendes Radar-Signal
- h: Einbauhöhe
- L: Füllstand
- r: Abstand
- S_{HF}: Radar-Signal
- s_{HF}, e_{HF}: Hochfrequenz-Signale

## Patentansprüche

1. Radar-basiertes Füllstandsmessgerät, umfassend:
- Ein Halbleiterbauteil (10), das ausgelegt ist,
∘ um elektrische Hochfrequenz-Signale (s_{HF}. e_{HF}) zu erzeugen und/oder zu empfangen, und
∘ um anhand von zumindest den empfangenen Hochfrequenzsignalen (e_{HF}) einen Füllstandswert (L) zu bestimmen,
- einen dielektrischen Wellenleiter (11a, b), der derart mit dem Halbleiterbauteil (10) kontaktiert ist, um die Hochfrequenz-Signale (s_{HF}) als Radar-Signale (S_{HF}) in
- eine Antenne (12) einzukoppeln, und/oder um empfangene Radar-Signale (E_{HF}) aus der Antenne (12) als elektrische Signale (e_{HF}) in das Halbleiterbauteil (10) einzukoppeln, und
- eine Vergusskapselung (13), die zumindest den Wellenleiter (11a, b) radial derart kapselt, dass zwischen dem Wellenleiter (11a, b) und der Vergusskapselung (13) ein definierter Hohlraum (14) ausgebildet ist.

2. Füllstandsmessgerät nach Anspruch 1, wobei der Wellenleiter (11a, b) mit einer Länge von zumindest 3 cm, insbesondere mehr als 8 cm, bemaßt ist.

3. Füllstandsmessgerät nach einem der vorhergehenden Ansprüche, wobei die Kapselung (13) so ausgelegt ist, dass der Hohlraum (14) zwischen dem Wellenleiter (11a, b) und der Vergusskapselung (13) einen Abstand (r) von mindestens dem Zweifachen der Wellenlänge der Radar-Signale (S_{HF}, E_{HF}) aufweist.

4. Füllstandsmessgerät nach einem der vorhergehenden Ansprüche, umfassend:
- Eine Leiterkarte (15), auf der das Halbleiterbauteil (10) angeordnet ist,
- eine auf der Leiterkarte (15) innerhalb der Vergusskapselung (13) angebrachte elektromagnetische Schirmung (16) des Halbleiterbauteils (10), wobei die Schirmung (16) den Wellenleiter (11a,b) derart zum Halbleiterbauteil (10) hin (10) fixiert, so dass die Radar-Signale (S_{HF}, E_{HF}) in den Wellenleiter (11a,b) bzw. in das Halbleiterbauteil (10) einkoppelbar sind.

5. Füllstandsmessgerät nach Anspruch 4, wobei der Wellenleiter (11a, b) derart zweiteilig ausgelegt ist, dass der Wellenleiter (11a, b) im Bereich der Schirmung (16) in ein erstes Segment (11a) und ein zweites Segment (11b) untergliedert ist.

6. Füllstandsmessgerät nach einem der vorhergehenden Ansprüche, umfassend:
- Ein Gehäuse (17), das zumindest das Halbleiterbauteil (10), den Wellenleiter (11a, b) und die Vergusskapselung (13) umschließt, wobei die Antenne (12) außerhalb des Gehäuses (17) befestigt ist, und
- eine Durchführung (18) im Gehäuse (17), die den Wellenleiter (11a, b) derart zur Antenne (12) hin fixiert, so dass die Radar-Signale (S_{HF}, E_{HF}) in die Antenne (12) bzw. in den Wellenleiter (11a, b) einkoppelbar sind.

7. Füllstandsmessgerät nach zumindest einem der vorhergehenden Ansprüche, wobei der Wellenleiter (11a, b) aus einem Isolationsmaterial mit einem Dielektrizitätswert von größer als 1, insbesondere HDPE oder PTFE, gefertigt ist.

8. Füllstandsmessgerät nach einem der Ansprüche 4 bis 7, wobei die Vergusskapselung (13) die vom Halbleiterbauteil (10) abgewandte Fläche der Leiterkarte (15) kapselt.

9. Füllstandsmessgerät nach zumindest einem der vorhergehenden Ansprüche, wobei eine Außenfläche (21) der Vergusskapselung (13) elektromagnetisch schirmend ausgelegt ist.

10. Füllstandsmessgerät nach zumindest einem der vorhergehenden Ansprüche, wobei das Halbleiterbauteil (10) ausgelegt ist, die elektrischen Hochfrequenz-Signale (s_{HF}) mit einer Frequenz von zumindest 100 GHz zu erzeugen bzw. nach Empfang entsprechende elektrische Hochfrequenz-Signale (e_{HF}) zu verarbeiten.

## Claims

1. Radar-based level transmitter, said transmitter comprising:
- a semi-conductor component (10), which is designed
o to generate and/or receive electrical high-frequency signals (s_{HF}, eHF), and
o to determine a level value (L) using at least the high-frequency signals (eHF) received,
- a dielectric waveguide (11a, b), which is in contact with the semi-conductor component (10) in order to couple the high-frequency signals (s_{HF}) into an antenna (12) as radar signals (S_{HF})
- and/or in order to couple received radar signals (E_{HF}) from the antenna (12) into the semi-conductor component (10) as electrical signals (e_{HF}), and
- an encapsulation (13) which radially encapsulates at least the waveguide (11a, b) in such a way that a defined cavity (14) is formed between the waveguide (11a, b) and the encapsulation (13).

2. Level transmitter as claimed in Claim 1, wherein the waveguide (11a, b) is sized with a length of at least 3 cm, particularly more than 8 cm.

3. Level transmitter as claimed in one of the previous claims, wherein the encapsulation (13) is designed in such a way that the cavity (14) between the waveguide (11a, b) and the encapsulation (13) has a distance (r) of at least twice the wave length of the radar signals (S_{HF}, E_{HF}).

4. Level transmitter as claimed in one of the previous claims, said transmitter comprising:
- a printed circuit board (15) on which the semi-conductor component (10) is arranged,
- an electromagnetic shield (16) of the semi-conductor component (10) attached to the printed circuit board (15) inside the encapsulation (13), wherein the shield (16) fixes the waveguide (11a, b) in the direction of the semi-conductor component (10) in such a way that the radar signals (S_{HF}, E_{HF}) can be coupled into the waveguide (11a, b) or into the semi-conductor component (10).

5. Level transmitter as claimed in Claim 4, wherein the waveguide (11a, b) is designed in two parts in such a way that the waveguide (11a, b) is subdivided into a first segment (11a) and a second segment (11b) in the area of the shield (16).

6. Level transmitter as claimed in one of the previous claims, said transmitter comprising:
- a housing (17) that at least encloses the semi-conductor component (10), the waveguide (11a, b) and the encapsulation (13), wherein the antenna (12) is secured outside the housing (17), and
- a feedthrough (18) in the housing (17) that fixes the waveguide (11a, b) in the direction of the antenna (12) in such a way that the radar signals (S_{HF}, E_{HF}) can be coupled into the antenna (12) or into the waveguide (11a, b).

7. Level transmitter as claimed in at least one of the previous claims, wherein the waveguide (11a, b) is made from an insulating material with a dielectric constant greater than 1, particularly HDPE or PTFE.

8. Level transmitter as claimed in one of the Claims 4 to 7, wherein the encapsulation (13) encapsulates the surface of the printed circuit board (15) facing away from the semi-conductor component (10).

9. Level transmitter as claimed in at least one of the previous claims, wherein an outer surface (21) of the encapsulation (13) is designed to provide an electromagnetic shield.

10. Level transmitter as claimed in at least one of the previous claims, wherein the semi-conductor component (10) is designed to generate the electrical high-frequency signals (s_{HF}) with a frequency of at least 100 GHz or to process corresponding electrical high-frequency signals (e_{HF}) after receiving them.

## Revendications

1. Transmetteur de niveau basé sur un radar, lequel transmetteur comprend :
- un composant semi-conducteur (10), lequel est conçu
o pour générer et/ou recevoir des signaux électriques à haute fréquence (s_{HF}, eHF), et
o pour déterminer une valeur de niveau (L) à l'aide d'au moins les signaux à haute fréquence (e_{HF}) reçus,
- un guide d'ondes diélectrique (11a, b), lequel est en contact avec le composant semi-conducteur (10) de manière à coupler les signaux à haute fréquence (s_{HF}) en tant que signaux radar (S_{HF}) dans
- une antenne (12), et/ou pour coupler des signaux radar (E_{HF}) reçus de l'antenne (12) en tant que signaux électriques (e_{HF}) dans le composant semi-conducteur (10), et
- un encapsulage (13) qui encapsule radialement au moins le guide d'ondes (11a, b) de telle sorte qu'un espace creux (14) défini est formé entre le guide d'ondes (11a, b) et l'encapsulage (13).

2. Transmetteur de niveau selon la revendication 1, pour lequel le guide d'ondes (11a, b) est dimensionné avec une longueur d'au moins 3 cm, notamment supérieure à 8 cm.

3. Transmetteur de niveau selon l'une des revendications précédentes, pour lequel l'encapsulage (13) est conçu de telle sorte que la cavité (14) entre le guide d'ondes (11a, b) et l'encapsulage (13) présente une distance (r) d'au moins deux fois la longueur d'onde des signaux radar (S_{HF}, E_{HF}).

4. Transmetteur de niveau selon l'une des revendications précédentes, lequel transmetteur comprend :
- une carte imprimée (15) sur laquelle est disposé le composant semi-conducteur (10),
- un blindage électromagnétique (16) du composant semi-conducteur (10) monté sur la carte imprimée (15) à l'intérieur de l'encapsulage (13), le blindage (16) fixant le guide d'ondes (11a, b) en direction du composant semi-conducteur (10) de telle sorte que les signaux radar (S_{HF}, E_{HF}) peuvent être couplés dans le guide d'ondes (11a, b) ou dans le composant semi-conducteur (10).

5. Transmetteur de niveau selon la revendication 4, pour lequel le guide d'ondes (11a, b) est conçu en deux parties de telle sorte que le guide d'ondes (11a, b) est subdivisé en un premier segment (11a) et un deuxième segment (11b) dans la zone du blindage (16).

6. Transmetteur de niveau selon l'une des revendications précédentes, lequel transmetteur comprend :
- un boîtier (17), lequel renferme au moins le composant semi-conducteur (10), le guide d'ondes (11a, b) et l'encapsulage (13), l'antenne (12) étant fixée à l'extérieur du boîtier (17), et
- une traversée (18) dans le boîtier (17), laquelle traversée fixe le guide d'ondes (11a, b) en direction de l'antenne (12) de telle sorte que les signaux radar (S_{HF}, E_{HF}) peuvent être couplés dans l'antenne (12) ou dans le guide d'ondes (11a, b).

7. Transmetteur de niveau selon au moins l'une des revendications précédentes, pour lequel le guide d'ondes (11a, b) est fabriqué en un matériau isolant présentant une valeur diélectrique supérieure à 1, notamment en HDPE ou en PTFE.

8. Transmetteur de niveau selon l'une des revendications 4 à 7, pour lequel l'encapsulage (13) encapsule la surface de la carte imprimée (15) opposée au composant semi-conducteur (10).

9. Transmetteur de niveau selon au moins l'une des revendications précédentes, pour lequel une surface extérieure (21) de l'encapsulage (13) est conçue de manière à assurer un blindage électromagnétique.

10. Transmetteur de niveau selon au moins l'une des revendications précédentes, pour lequel le composant semi-conducteur (10) est conçu pour générer les signaux électriques à haute fréquence (s_{HF}) avec une fréquence d'au moins 100 GHz ou pour traiter les signaux électriques à haute fréquence (e_{HF}) correspondants après réception.
